# EUROPEAN PATENT APPLICATION

(11) **EP 4 661 103 A1**
(43) Date of publication of application: **10.12.2025**
(21) Application number: 24750089.5
(22) Date of filing: 24.01.2024
(51) Int. Cl.: H01M 4/505, C01G 45/00

(54) **POSITIVE ELECTRODE ACTIVE MATERIAL FOR SECONDARY BATTERIES, AND SECONDARY BATTERY**

(30) Priority: 30.01.2023 JP 2023012189
(71) Applicant: Panasonic Intellectual Property Management Co., Ltd., Kadoma-shi, Osaka 571-0057 (JP)
(72) Inventor: OTO, Takashi, Kadoma-shi, Osaka 571-0057 (JP); ZHANG, Jin, Kadoma-shi, Osaka 571-0057 (JP)
(74) Representative: Novagraaf International SA
(86) International application number: PCT/JP2024/002053
(87) International publication number: WO 2024/162139

(57) **Abstract**

A positive electrode active material for secondary batteries contains a lithium-metal composite oxide having a rock-salt type crystal structure assignable to space group Fm-3m. The lithium-metal composite oxide contains at least Li and Mn. The average aspect ratio of particles of the lithium-metal composite oxide is less than 2.10.

## Description

### [Cross-Reference to Related Applications]

The present disclosure is based on and claims priority under 35 U.S.C. §119 with respect to the Japanese Patent Application No. 2023-012189, filed on January 30, 2023, of which entire content is incorporated herein by reference into the present specification.

### [Technical Field]

The present disclosure relates to a positive electrode active material for secondary batteries and a secondary battery.

### [Background Art]

Secondary batteries, particularly lithium-ion secondary batteries, are expected as power sources for small consumer applications, power storage devices, and electric vehicles because of their high power and high energy density. As a positive electrode active material for lithium-ion secondary batteries, a composite oxide of lithium and a transition metal (e.g., cobalt) is used. Replacement of part of the cobalt by nickel can achieve high capacity.

At the same time, Li-excess lithium-metal composite oxides based on Li₁₊ₓMn₁₋ₓO₂ with a rock-salt structure have attracted attention in recent years in response to the demand for high energy density.

Patent Literature 1 discloses a positive electrode active material containing a lithium-transition metal composite oxide having a crystal structure assigned to space group Fm-3m and represented by the compositional formula Li₁₊ₓNb_{y}Me_{z}AₚO₂ (where Me is a transition metal including Fe and/or Mn, 0 < x < 1, 0 < y < 0.5, 0.25 ≤ z < 1, A is an element other than Nb and Me, and 0 ≤ p ≤ 0.2, except Li₁₊ₚFe_{1-q}Nb_{q}O₂ where 0.15 < p ≤ 0.3 and 0 < q ≤ 0.3).

### [Citation List]

### [Patent Literature]

Patent Literature 1: Japanese Patent No. 6197029

### [Summary of Invention]

### [Technical Problem]

Patent Literature 1 enables high capacity to be achieved by controlling the composition (i.e., adding Nb). However, the effect of capacity increase is not sufficient, and there is still room for improvement.

### [Solution to Problem]

In view of the foregoing, one aspect of the present disclosure relates to a positive electrode active material for secondary batteries, including a lithium-metal composite oxide having a rock-salt type crystal structure assignable to space group Fm-3m, wherein the lithium-metal composite oxide contains at least Li and Mn, and an average aspect ratio of particles of the lithium-metal composite oxide is less than 2.10.

Another aspect of the present disclosure relates to a secondary battery including: a positive electrode; a negative electrode; an electrolyte; and a separator provided between the positive electrode and the negative electrode, wherein the positive electrode contains the positive electrode active material for secondary batteries described above.

### [Advantageous Effects of Invention]

According to the present disclosure, a high-energy-density secondary battery can be achieved.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] FIG. 1 is a schematic oblique view of a secondary battery according to an embodiment of the present disclosure, with a portion cut away.
[FIG. 2] FIG. 2 is a graph showing the relationship between the average aspect ratio and the discharge capacity per unit mass, both measured for each lithium-metal composite oxide.

### [Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained. In the present description, the phrase "a numerical value A to a numerical value B" means to include the numerical value A and the numerical value B and can be phrased as "a numerical value A or more and a numerical value B or less". In the following description, when the lower and upper limits of numerical values related to specific physical properties, conditions, or the like are mentioned as examples, any of the mentioned lower limits and any of the mentioned upper limits can be combined in any combination as long as the lower limit is not equal to or more than the upper limit. When a plurality of materials are mentioned as examples, one kind of them may be selected and used singly, or two or more types of them may be used in combination.

The present disclosure encompasses a combination of matters recited in any two or more claims selected from multiple claims in the appended claims. In other words, as long as no technical contradiction arises, matters recited in any two or more claims selected from multiple claims in the appended claims can be combined.

In the following description, the word "comprise" (or "include" or "contain") is an expression encompassing the phrases "contain (or include)", "essentially consist of", "consist of", "composed of", "formed of", "made of", and the like.

Secondary batteries include at least nonaqueous electrolyte secondary batteries such as a lithium-ion battery and a lithium-metal secondary battery, and all-solid-state batteries with a solid-state electrolyte.

A positive electrode active material for secondary batteries according to an embodiment of the present disclosure contains a lithium-metal composite oxide (hereinafter, also referred to as "lithium-metal composite oxide (Fm)") having a rock-salt type crystal structure assignable to space group Fm-3m. The lithium-metal composite oxide (Fm) has a crystal structure based on a rock-salt structure assigned to space group Fm-3m and has a crystal structure similar to a rock-salt structure typically represented by, for example, NaCl. It is possible that oxygen atoms are arranged in the anion sites of such a crystal structure, while Li atoms and metal atoms other than Li are irregularly arranged in the cation sites.

The lithium-metal composite oxide (Fm) contains at least Li and Mn. A lithium-metal composite oxide (Fm) based on Li₁₊ₓMn₁₋ₓO₂ with a rock-salt structure is expected to express high capacity.

At present, an example was reported in which several lithium-metal composite oxides (Fm) have been synthesized on a laboratory scale by applying high shear forces to a raw material mixture using a stirring device such as a ball mill. The raw material mixture contains a lithium compound and a manganese compound.

On the other hand, in mass production of the lithium-metal composite oxide (Fm), efficient synthesis is required through sintering of the raw material mixture. However, particles of the lithium-metal composite oxide (Fm) synthesized by sintering are usually very hard and often aggregated.

Particles obtained by crushing such aggregated particles having high hardness often fail to express sufficiently high discharge capacity. A detailed analysis of the relationship between the particle shape and the capacity revealed that particle shape factors severely affect the capacity expression.

In general, particles obtained by crushing hard aggregate tend to have an uneven shape with pointed ends. With particles having an uneven shape, portions that are likely to accept charge and discharge react preferentially, and reaction is unlikely to proceed in portions that are unlikely to accept charge and discharge. Therefore, it is considered that the charge-discharge reaction proceeds unevenly and polarization increases as well. In addition, as the particle shape becomes more uneven, the tortuosity of the electron conduction paths tends to increase and the resistance tends to be higher.

Further, the capacity of the lithium-metal composite oxide (Fm) is more susceptible to the particle shape factors than conventionally used positive electrode active materials. In other words, the capacity of the lithium-metal composite oxide (Fm) is remarkably increased when the particle shape is controlled to be more suitable for charging and discharging. The reason for this is not clear, but it is inferred that various factors are intricately related, such as: particles with a rock-salt type crystal structure assigned to space group Fm-3m exhibiting relatively low electronic conductivity; particles with high hardness being less prone to internal strain; and such particles having a relatively smooth surface.

Specifically, when the average aspect ratio of the particles of a lithium-metal composite oxide (Fm) synthesized by sintering is set to less than 2.1, the capacity is significantly increased. By controlling the average aspect ratio of the particles to less than 2.10, the particle shapes become uniform, and the difference in acceptability becomes small between the portions that are likely to accept charge and discharge and the portions that are unlikely to accept charge and discharge. As a result, it is considered that the charge-discharge reaction proceeds uniformly and the polarization is reduced, thereby increasing the discharge capacity.

Furthermore, the lithium-metal composite oxide (Fm) is a material having a relatively low electronic conductivity among the materials used as positive electrode active materials. The more non-uniform the particle shapes become, the larger the tortuosity of the electron conduction paths is. By contrast, when the average aspect ratio of the particles is set to less than 2.10, distances between the particles in an electrode are average out, and the tortuosity of the electron conduction paths is reduced. These are considered to contribute significantly to the capacity increase.

The average aspect ratio of the particles should be less than 2.10, preferably 2.09 or less, more preferably 1.94 or less, and further preferably 1.80 or less or 1.70 or less.

### (Aspect Ratio)

The aspect ratio means a value (maximum diameter Dmax/maximum diameter dmax) obtained by dividing a maximum diameter Dmax of a particle by a maximum diameter dmax in a direction perpendicular to the maximum diameter Dmax. The maximum diameter Dmax and the maximum diameter dmax of the lithium-metal composite oxide (Fm) may be measured using particles of the lithium-metal composite oxide (Fm) as a raw material powder prior to being formed into a positive electrode, or the maximum diameter Dmax and the maximum diameter dmax in the positive electrode may be measured. Since the lithium-metal composite oxide (Fm) having the rock-salt type crystal structure is robust, both methods give generally similar results. The maximum diameter Dmax and the maximum diameter dmax in the positive electrode are measured using particles of the lithium-metal composite oxide (Fm) observed in a cross-sectional scanning electron microscope (SEM) image (hereinafter simply referred to as "cross-sectional SEM image") of the positive electrode in the thickness direction. The particles observed in the cross-sectional SEM image of the positive electrode may be particle cross-sections. The maximum diameter Dmax and the maximum diameter dmax of a raw material powder are measured using particles of the lithium-metal composite oxide (Fm) observed in a SEM image of the raw material powder (hereinafter simply referred to as "powder SEM image").

The following describes an example of a process of obtaining an average aspect ratio from a cross-sectional SEM image.

### (1) Preparation of Cross Section of Positive Electrode

First, a positive electrode as a measurement target is prepared. Typically, a positive electrode includes a positive electrode current collector and a positive electrode active material layer formed on a surface of the positive electrode current collector. The positive electrode active material layer and positive electrode current collector such as above are simultaneously cut in the thickness direction of the positive electrode to form a cross section. At this time, the positive electrode active material layer may be cured by filling a thermosetting resin. For example, a cross-section sample of the positive electrode active material layer may be obtained using a cross-section polisher (CP) method or a focused ion beam (FIB) method, for example.

The positive electrode as a measurement target is taken out of a secondary battery having a depth of discharge (DOD) of 90% or more. The depth of discharge (DOD) means a ratio of the amount of electricity discharged to the amount of electricity that a battery in the fully charged state has. The rated capacity corresponds to the amount of electricity fully charged (i.e., the full charge capacity) when a battery in the fully discharged state (DOD = 100%) is charged to be in the fully charged state (SOC = 100%, DOD = 0%). The voltage of a battery in the fully charged state corresponds to the charge cutoff voltage. The voltage of a battery in the fully discharged state corresponds to the discharge cutoff voltage.

### (2) Capture of Cross-Sectional SEM Image

Next, the cross-section sample of the positive electrode (positive electrode active material layer) is observed by SEM. Observation by SEM is performed, for example, at a magnification of 500 times to 3000 times. The cross-sectional SEM image is captured so that an area of the positive electrode active material layer having a length of 30 µm or more (desirably, 40 µm or more) in the in-plane direction is observed.

### (3) Image Analysis

For each of arbitrarily selected 100 or more particles (particle cross-sections) of the lithium-metal composite oxide (Fm) in the cross-sectional SEM image, "maximum diameter Dmax/maximum diameter dmax" is determined as an aspect ratio. An average aspect ratio is obtained by arithmetically averaging the aspect ratios of the 100 or more particles.

Image analysis software (e.g., ImageJ) can be used in image analysis. In the image analysis, the cross-sectional SEM image may be binarized so that the particles of the lithium-metal composite oxide (Fm) are binarized to black (or white) and the rest is binarized to white (or black).

In the image analysis, elemental analysis by energy-dispersive X-ray spectroscopy (EDX) or using an electron-probe microanalyzer (EPMA) may be performed on the cross-sectional SEM image. Then, a mapped image of the lithium-metal composite oxide (Fm) may be acquired from the resulting analytical data. For each of the arbitrarily selected 100 or more particles (particle cross-sections) of the lithium-metal composite oxide (Fm), "maximum diameter Dmax/maximum diameter dmax" may be determined as an aspect ratio using such a mapped image.

### (Average Particle Diameter Dave (D50))

The average particle diameter Dave (D50 (median diameter) in a number-based cumulative particle size distribution) of the lithium-metal composite oxide (Fm) can be determined from a number-based cumulative particle size distribution of 100 or more particles (particle cross-sections) of the lithium-metal composite oxide (Fm) arbitrarily selected from the cross-sectional SEM image. First, the area is measured for each of the particles (particle cross-sections). Diameters Dd (Dd = 8√(Sd/π³)) of equivalent spheres having a measured area Sd as the average cross-sectional area of spheres are obtained. Then, the number-based cumulative particle size distribution of the diameters (Dd) is obtained. The median diameter (D50) means the diameter of the equivalent sphere at which the cumulative number of particles, when counted in ascending order of their equivalent sphere diameters, reaches 50%. The D50 may be selected according to the electrode design. The average particle diameter D50 is, for example, larger than 0.22 µm, and may be 0.23 µm or more or 0.24 µm or more.

Similarly, a "span value" defined by (D90 - D10)/D50 can be obtained from the equivalent sphere diameters D10 and D90 respectively corresponding to the cumulative numbers of particles, when counted in ascending order of their equivalent sphere diameters, of 10% and 90%.

The span value of the lithium-metal composite oxide in the number-based cumulative particle size distribution may satisfy, for example, 1.2 < (D90 - D10)/D50, or may satisfy 1.4 < (D90 - D10)/D50 or 1.5 < (D90 - D10)/D50. The upper limit of the span value is not particularly limited and may satisfy (D90 - D10) /D50 ≤ 8.4. The span value may satisfy 1.6 ≤ (D90 - D10)/D50, may satisfy 1.7 ≤ (D90 - D10)/D50, or may satisfy 1.8 ≤ (D90 - D10)/D50.

The D90 is larger than 0.46 µm and may be 0.47 µm or larger or 0.5 µm or larger. A lithium-metal composite oxide (Fm) having such a relatively large particle diameter can be obtained by crushing a hard lithium-metal composite oxide (Fm), which is obtained by sintering a raw material mixture, under appropriate conditions. Note that the presence of particles having a large particle diameter makes it easy to increase the capacity of the electrode.

Since the lithium-metal composite oxide (Fm) has high hardness and is robust, the number-based cumulative particle size distribution measured from 100 or more particles (particle cross-sections) of the lithium-metal composite oxide (Fm) arbitrarily selected from the cross-sectional SEM image is similar to the number-based cumulative particle size distribution measured for a raw material powder of the lithium-metal composite oxide (Fm) for electrodes or a powder of the lithium-metal composite oxide (Fm) separated and collected from a positive electrode disassembled from a finished battery. The number-based cumulative particle size distribution of the raw material powder or the powder separated and collected from the positive electrode can be obtained, for example, by converting a volume-based cumulative particle size distribution measured using a laser diffraction/scattering particle size distribution measuring device.

### (Roundness)

Instead of controlling the average aspect ratio of the particles, the average roundness of the particles may be controlled. Specifically, when the average roundness of the particles is 0.55 or more, the capacity is remarkably increased. As a result of the average roundness of the particles being controlled to 0.55 or more, the particle shape becomes uniform, and a difference in acceptability becomes small between the portions that are likely to accept charge and discharge and the portions that are unlikely to accept charge and discharge. As a consequence, it is considered that the charge-discharge reaction proceeds uniformly and the polarization is reduced, thereby increasing the discharge capacity.

When a particle is a true sphere, the roundness is 1. Therefore, a particle can be considered to be closer to a true sphere as the roundness increases. As the average roundness is increased to 0.55 or more, the particles become closer to true spheres accordingly, and distances between the particles in an electrode tend to be average out. This reduces the tortuosity of the electron conduction paths, which is more advantageous for capacity increase.

The average roundness of the particles should be 0.55 or more, preferably 0.60 or more, more preferably 0.65 or more, and further preferably 0.67 or more.

Here, the roundness means a value (Sn/Sc) obtained by dividing an area Sn of an observed particle by an area Sc of the circumscribed circle of the particle. Specifically, when Dmax already described is used, it is calculated using "roundness = 4 × Sn/π(Dmax)²".

The roundness of the lithium-metal composite oxide (Fm) may be measured using particles of the lithium-metal composite oxide (Fm) as a raw material powder prior to being formed into a positive electrode or may be measured in a positive electrode. Since the lithium-metal composite oxide (Fm) having the rock-salt type crystal structure is robust, both methods give generally similar results. The roundness in the positive electrode is measured using particles of the lithium-metal composite oxide (Fm) observed in the above-described cross-sectional SEM image. The particles observed in the cross-sectional SEM image of a positive electrode may be particle cross-sections. The roundness of the raw material powder is measured using particles of the lithium-metal composite oxide (Fm) observed in a SEM image of the raw material powder (hereinafter, simply referred to as "powder SEM image").

On a cross-sectional SEM or powder SEM image, a value "Sn/Sc" is determined as the roundness for each of arbitrarily selected 100 particles of the lithium-metal composite oxide (Fm). By arithmetically averaging the obtained 100 or more values Sn/Sc, an average of the values Sn/Sc is obtained.

The particles of the lithium-metal composite oxide (Fm) can contain an impurity element. The impurity element can be introduced into the particles, for example, when crushing hard aggregate of the particles. For crushing the aggregate of the particles, a stirring device capable of imparting large shear forces to an object to be crushed is used, such as a bead mill or a ball mill. In such a stirring device, media such as balls or beads are used. Since such media are constituted of alumina, zirconia, or the like, the impurity element may include Al, Zr, W, Fe, Cr, or Ni, for example. Incidentally, the impurity element is distributed unevenly in the surface layer of the particles.

Here, "uneven distribution" means that impurities are present at a high concentration CH at a depth of 5% or less of the particle diameter from the surface layer of a particle, while being present at a low concentration CL (CH > CL) or absent in a circular area having a radius of 5% or less of the particle diameter from the center of gravity of the particle. At this time, CH ≥ 2CL may be satisfied, or CH ≥ 5CL may be satisfied.

The presence or absence of "uneven distribution" of the impurity element may be confirmed by performing elemental analysis by EDX or EPMA on the cross-sectional SEM image described above. A mapped image of the impurity element in the particles of the lithium-metal composite oxide (Fm) may be acquired from the analytical data. Such a mapped image may be used to analyze each of the arbitrarily selected 10 or more particles of the lithium-metal composite oxide (Fm). It may be determined that the impurity element is distributed unevenly in the surface layer of the particles if CH > CL, CH ≥ 2CL, or CH ≥ 5CL is satisfied for 80% or more of the particles.

### (Specific Surface Area)

The specific surface area of the lithium-metal composite oxide (Fm) is, for example, less than 21.9 m²/g, and may be 21 m²/g or less, less than 13.2 m²/g, 13 m²/g or less, 11 m²/g or less, or 10 m²/g or less. A lithium-metal composite oxide (Fm) synthesized on a laboratory scale by imparting high shear forces to a raw material mixture using a stirring device such as a ball mill has a very large specific surface area.

By contrast, a lithium-metal composite oxide (Fm) synthesized by sintering does not have a history imparted by shear forces high enough to allow a solid-state reaction to proceed, even if it is in the form of particles or a powder obtained by crushing aggregate of the particles. Therefore, the specific surface area of the lithium-metal composite oxide (Fm) synthesized by sintering is, for example, 0.13 m²/g or more and less than 21.9 m²/g, may be 0.13 m²/g or more and less than 13.2 m²/g, and tends to range from 6 m²/g to 12 m²/g or 6 m²/g to 10 m²/g. When the specific surface area is within one of the above ranges, the packing rate of the lithium-metal composite oxide (Fm) to a positive electrode can be increased and it is advantageous in easy inhibition of side reactions. When the specific surface area is excessively large, the surface state may become unstable to make it difficult to inhibit the side reactions.

The specific surface area may be measured using a lithium-metal composite oxide (Fm) as a raw material powder prior to being formed into a positive electrode or may be measured using a lithium-metal composite oxide (Fm) separated from a positive electrode. Both methods give generally similar results.

Here, the specific surface area of the lithium-metal composite oxide (Fm) is measured after 0.20 g to 0.25 g of a sample of the lithium-metal composite oxide (Fm) is collected, the sample is accommodated in a measurement cell constituted as a glass tube for specific surface area measurement, and the measurement cell is dried and degassed. Drying and degassing are performed at a pressure of 6.67 Pa and a temperature of 250°C ± 5°C for 1 hour or more. The mass of the sample in the measurement cell is then measured to the order of 0.1 mg. Then, the adsorption amount of nitrogen on the sample at a temperature of -196°C is measured using a specific surface area measuring device. As the measuring device, an automated specific surface area/pore distribution measuring device "TRISTER II 3020" manufactured by SHIMADZU CORPORATION is used, for example. The specific surface area of the lithium-metal composite oxide (Fm) is determined from the result of the adsorption measurement in the partial pressure (relative pressure) range of 0.001 to 0.2 using the multipoint BET method.

The lithium-metal composite oxide (Fm) can contain a positive element M different from Li and Mn. The element M such as above should be a positive element other than hydrogen and may be a metal element (including a generally-called metalloid element). That is, the lithium-metal composite oxide (Fm) can be a lithium-transition metal composite oxide containing at least three metals.

The element M may be, for example, at least one selected from the group consisting of Ti, Fe, Ge, Si, Ga, Ni, Co, Sn, Cu, Nb, Mo, Bi, V, Cr, Y, Zr, Zn, Na, K, Ca, Mg, Pt, Au, Ag, Ru, Ta, W, La, Ce, Pr, Gd, Sm, Eu, Yb, Dy, Al, and Er. The lithium-metal composite oxide (Fm) may contain, as the element M, any two or more elements selected from the above group.

Even when the lithium-metal composite oxide (Fm) contains an element M, the main component of the metal element other than Li is preferably Mn. The number b of atoms of Mn in the lithium-metal composite oxide (Fm) may be the largest among the numbers of atoms of the metals other than Li in the lithium-metal composite oxide (Fm). The number of atoms of Mn may be greater than the total number c of atoms of the metal elements other than Li and Mn. A ratio (b/c) of the number b of atoms of Mn to the number c of atoms of the metal elements other than Li and Mn in the lithium-metal composite oxide (Fm) is, for example, 1 or more and 15 or less, preferably 1 or more and 12 or less, and may be larger than 1 and 12 or less or 2 or more and 12 or less.

The lithium-metal composite oxide (Fm) desirably contains at least Ti as the element M. A lithium-metal composite oxide (Fm) containing Ti as the element M can express particularly high capacity. The reason for this is not clear, but it is considered that in part, Ti can be present as Ti⁴⁺ with an empty d-orbital in a lithium-metal composite oxide. In this case, it is considered that a highly symmetric, more stable, and high capacity rock-salt type crystal structure is formed. Further, it is considered that such a rock-salt structure is unlikely to become unstable even after repeated charging and discharging.

When the lithium-metal composite oxide (Fm) contains Ti, a ratio: Mn/Ti of the number of atoms of Mn to the number of atoms of Ti in the lithium-metal composite oxide may be 4 or more, 5 or more, or 6 or more, and preferably 7 or more. The ratio Mn/Ti may be 70 or less or 30 or less, and preferably 15 or less.

The lithium-metal composite oxide (Fm) may be an oxyfluoride containing F. The fluorine may substitute for oxygen atoms at the anion sites in the above crystal structure. In this case, the crystal structure is stabilized and higher capacity can be achieved even when the lithium-metal composite oxide (Fm) is in a Li-excess state. In addition, substitution by the fluorine atom increases the average discharge potential. The Li-excess state means a state in which the number of atoms of Li is larger than the total number of atoms of the metal elements other than Li in the lithium-metal composite oxide (Fm).

The arrangement of Li at the cationic sites is irregular and Li bonding states are diverse in a Li-excess lithium-metal composite oxide (Fm). Therefore, voltage distribution associated with Li release ranges widely. For this reason, difficulties can arise in utilization of the low-potential tail of the voltage distribution as part of the capacity. However, introduction of fluorine atoms causes the voltage distribution associated with Li release to move toward the high potential side, which makes it easier to use the tail portions as part of the capacity. This further increases available capacity.

A lithium-metal composite oxide (Fm) being an oxyfluoride can be represented by the compositional formula LiₐMn_{b}M_{c}O_{d}Fₑ. Here, 1 ≤ a < 1.4, 0.5 ≤ b < 0.9, 0 ≤ c ≤ 0.4, 1.33 ≤ d ≤ 2, 0 ≤ e ≤ 0.67, and 1.7 ≤ d + e ≤ 2.2 are satisfied.

The lithium-metal composite oxide (Fm) can be represented by the compositional formula LiₐMn_{b}Ti_{c}M_{d}OₑF_{f}. Here, 1 ≤ a ≤ 1.4, 0.3 ≤ b ≤ 0.9, 0 < c ≤ 0.5, 0 < d ≤ 0.25, 0 ≤ f ≤ 0.7, and 1.7 ≤ e + f ≤ 2 are satisfied. Alternatively, 1 ≤ a ≤ 1.4, 0.5 ≤ b ≤ 0.9, 0.02 < c ≤ 0.4, 0 ≤ f ≤ 0.67, and 1.7 ≤ e + f ≤ 2.2 are satisfied. The value of e + f is often 2 or less, may be 1.94 or less, 1.9 or less, or 1.8 or less.

As indicated in the above compositional formulas, some of the oxygen atoms at the anion sites may be replaced by fluorine atoms. As a result, the Li-excess state (a > 1) is stabilized and high capacity can be achieved. In addition, the average discharge potential is increased as described above to further increase available capacity.

A lithium-metal composite oxide (Fm) not containing fluorine can be represented by the compositional formula LiₐMn_{b}M_{c}O_{d}. Here, 1 ≤ a < 1.4, 0.5 ≤ b < 0.75, 0 ≤ c ≤ 0.35, and 1.6 ≤ d ≤ 2 are satisfied.

It is noted that the contents of the elements constituting the lithium-metal composite oxide (Fm) can be measured using an inductively coupled plasma atomic emission spectrometer (ICP-AES), an electron probe microanalyzer (EPMA), or an energy dispersive X-ray spectrometer (EDX), for example.

### <Method for Producing Lithium-Metal Composite Oxide (Fm)>

No particular limitation is placed on a method for producing the lithium-metal composite oxide (Fm). However, it is preferable to obtain the lithium-metal composite oxide (Fm) by sintering a raw material mixture of elements constituting the lithium-metal composite oxide (Fm). Sintering promotes the growth of crystals similar to the rock-salt structure assigned to space group Fm-3m, thereby obtaining a lithium-metal composite oxide having a large crystallite size. Crushing may be performed thereafter to control the crystallite size within a desired range.

As the raw materials of the elements constituting the lithium-metal composite oxide, for example, an Mn compound, a compound of the element M, a lithium compound, a fluorine compound, and a titanium compound may be arbitrarily selected and used. The types and mixing ratios of the raw materials may be appropriately selected according to the desired compositions described above.

Examples of the Mn compound include Mn oxides such as MnO₂ and Mn₂O₃, and manganese salts such as lithium manganate. Examples of the compound of the element M include M salts such as an oxide, an oxyfluoride, and a hydroxide. Examples of the lithium compound include lithium oxides such as Li₂O, and lithium salts such as LiOH and lithium manganate (LiMnO₂). Examples of the fluorine compound include fluorine salts such as lithium fluoride (LiF). Examples of the titanium compound include titanium oxides such as TiO₂, and titanium salts such as lithium titanate.

The sintering atmosphere for the raw material mixture can vary depending on the composition of the lithium-metal composite oxide (Fm) to be obtained or the types of the raw materials, and may be, for example, an oxidizing atmosphere (e.g., in air or in the presence of oxygen). It is desirable to circulate the atmosphere gas.

The sintering temperature for the raw material mixture may differ depending on the composition of the lithium-metal composite oxide (Fm) to be obtained or the types of the raw materials, and may be, for example, 700°C or higher, and preferably 900°C or higher and 1300°C or lower.

When the lithium-metal composite oxide (Fm) obtained by sintering is in the form of aggregate of the particles, the aggregate of the particles may be crushed to have a desired aspect ratio or roundness. In this case, a stirring device capable of imparting large shear forces to the particles, such as a ball mill or a bead mill, may be used.

There are various methods for controlling the particle shape, and the control method is not limited to aggregated particle crushing. For example, raw material mixture sintering may be performed under stirring of the raw material mixture. For example, the raw material mixture may be sintered under stirring using a sintering furnace equipped with a fluidized bed. Alternatively, nearly spherical particles may be used as part of the raw materials. For example, a nearly spherical manganese compound or manganese titanium composite compound may be used as a raw material.

The following describes the secondary battery according to an embodiment of the present disclosure in detail. The secondary battery includes the following positive electrode, negative electrode, electrolyte, and separator, for example.

### [Positive Electrode]

The positive electrode includes a positive electrode current collector and a positive electrode mixture layer formed on a surface of the positive electrode current collector and containing a positive electrode active material. As the positive electrode, the above-described positive electrode for secondary batteries is used. The positive electrode mixture layer can be formed, for example, by applying a positive electrode slurry to the surface of the positive electrode current collector, followed by drying. Here, a positive electrode mixture containing a positive electrode active material, a binder, and the like is dispersed in a dispersion medium in the positive electrode slurry. The applied film after drying may be rolled, if necessary. The positive electrode mixture layer may be formed on either surface of the positive electrode current collector or may be formed on both surfaces.

The positive electrode mixture layer contains a positive electrode active material as an essential component, and can contain a binder, a thickener, a conductive agent, a positive electrode additive, and the like as optional components. Any known materials can be used as the binder, the thickener, and the conductive agent.

The positive electrode active material contains the above-described lithium-metal composite oxide (Fm) having a crystal structure similar to the rock-salt structure assigned to space group Fm-3m. The lithium-metal composite oxide (Fm) is composed of, for example, secondary particles in which a plurality of primary particles are aggregated. The particle diameter of the primary particles is typically from 0.01 µm to 1 µm.

The lithium-metal composite oxide (Fm) may be mixed with another well-known lithium-metal oxide for use as the positive electrode active material. Examples of the other well-known lithium-metal oxide include lithium-transition metal composite oxides such as LiₐCoO₂, LiₐNiO₂, LiₐMnO₂, LiₐCo_{b}Ni_{1-b}O₂, LiₐCo_{b}M_{1-b}O_{c}, LiₐNi_{1-b}M_{b}O_{c}, LiₐMn₂O₄, LiₐMn_{2-b}M_{b}O₄, LiMePO₄, and Li₂MePO₄F. Here, M is at least one element selected from the group consisting of Na, Mg, Sc, Y, Mn, Fe, Co, Ni, Cu, Zn, Al, Cr, Pb, Sb, and B. Me includes at least a transitional element (e.g., includes at least one selected from the group consisting of Mn, Fe, Co, and Ni). Here, 0 ≤ a ≤ 1.2, 0 ≤ b ≤ 0.9, and 2.0 ≤ c ≤ 2.3. Note that the value a indicating the molar ratio of lithium is increased or decreased by charging or discharging.

The shape and thickness of the positive electrode current collector can be selected from the shapes and ranges according to the negative electrode current collector, respectively. Examples of the material of the positive electrode current collector include stainless steel, aluminum, aluminum alloys, and titanium.

### [Negative Electrode]

The negative electrode includes, for example, a negative electrode current collector and may include a negative electrode active material layer formed on a surface of the negative electrode current collector. The negative electrode active material layer can be formed, for example, by applying a negative electrode slurry to the surface of the negative electrode current collector, followed by drying. Here, a negative electrode mixture containing a negative electrode active material, a binder, and the like is dispersed in a dispersion medium in the negative electrode slurry. The applied film after drying may be rolled, if necessary. That is, the negative electrode active material may be a mixture layer. Alternatively, a lithium metal foil or a lithium alloy foil may be attached to the negative electrode current collector. The negative electrode active material layer may be formed on either surface of the negative electrode current collector or may be formed on both surfaces.

The negative electrode active material layer contains a negative electrode active material as an essential component and may contain a binder, a conductive agent, a thickener, and the like as optional components. Any known materials can be used as the binder, the conductive agent, and the thickener.

Examples of the negative electrode active material include materials that electrochemically absorb and release lithium ions, lithium metals, and lithium alloys. Examples of the materials that electrochemically absorb and release lithium ions include carbon materials and alloy-based materials. Examples of the carbon materials include graphite, graphitizable carbon (soft carbon), and non-graphitizable carbon (hard carbon). Among these, graphite is preferable because of its excellent stability during charging and discharging and small irreversible capacity. Examples of the alloy-based materials include those containing at least one metal capable of forming an alloy with lithium. For example, a composite material including a lithium ion conductive phase and silicon phases dispersed in the lithium ion conductive phase may be used.

Examples of the negative electrode current collector include non-porous conductive substrates (e.g., a metal foil) and porous conductive substrates (e.g., mesh, net, and a punched sheet). Examples of the material of the negative electrode current collector include stainless steel, nickel, nickel alloys, copper, and copper alloys.

### [Electrolyte]

The electrolyte may be a liquid-state electrolyte (liquid electrolyte), a gel-state electrolyte, or a solid-state electrolyte. The liquid-state electrolyte is, for example, a liquid electrolyte containing a nonaqueous solvent and a salt dissolved in the nonaqueous solvent. The concentration of the salt in the liquid electrolyte is 0.5 mol/L or more and 2 mol/L or less, for example. The liquid electrolyte may contain a known additive.

The gel-state electrolyte contains a salt and a matrix polymer, or contains a salt, a nonaqueous solvent, and a matrix polymer. As the matrix polymer, a polymer material that gels by absorbing a nonaqueous solvent is used, for example. Examples of the polymer material include fluorocarbon resins, acrylic resins, polyether resins, and polyethylene oxides.

As the solid-state electrolyte, a material (e.g., an oxide-based solid-state electrolyte, a sulfide-based solid-state electrolyte, or a halide-based solid-state electrolyte) known in the field of, for example, all-solid-state lithium-ion secondary batteries is used.

For example, a liquid-state nonaqueous electrolyte is prepared by dissolving a salt in a nonaqueous solvent. The salt is an electrolyte salt that dissociates ionically in an electrolyte, and can include a lithium salt, for example. The electrolyte can contain various additives. The electrolyte is usually used in the liquid state as it is but may be used in a state in which its fluidity is restricted by a gelling agent or the like.

Examples of the nonaqueous solvent include cyclic carbonic acid esters, chain carbonic acid esters, cyclic carboxylic acid esters, and chain carboxylic acid esters. Examples of the cyclic carbonic acid esters include propylene carbonate (PC), ethylene carbonate (EC), and vinylene carbonate (VC). Examples of the chain carbonic acid esters include diethyl carbonate (DEC), ethyl methyl carbonate (EMC), and dimethyl carbonate (DMC). Examples of the cyclic carboxylic acid esters include γ-butyrolactone (GBL) and γ-valerolactone (GVL). Examples of the chain carboxylic acid esters include methyl acetate, ethyl acetate, propyl acetate, methyl propionate (MP), and ethyl propionate (EP). The nonaqueous solvent may be used singly, or two or more types thereof may be used in combination.

Examples of the lithium salt that can be used include lithium salts of chlorine-containing acids (e.g., LiClO₄, LiAlCl₄, and LiB₁₀Cl₁₀), lithium salts of fluorine-containing acids (e.g., LiPF₆, LiPF₂O₂, LiBF₄, LiSbF₆, LiAsF₆, LiCF₃SO₃, and LiCF₃CO₂), lithium salts of fluorine-containing acid imides (e.g., LiN (FSO₂)₂, LiN(CF₃SO₂)₂, LiN(CF₃SO₂)(C₄F₉SO₂), and LiN(C₂F₅SO₂)₂), and lithium halides (e.g., LiCl, LiBr, and LiI). The lithium salt may be used singly, or two or more types thereof may be used in combination.

The concentration of the lithium salt in the electrolyte may be 1 mol/liter or more and 2 mol/liter or less or 1 mol/ liter or more and 1.5 mol/liter or less. As a result of the concentration of the lithium salt being controlled within either of the above ranges, an electrolyte having excellent ionic conductivity and an appropriate viscosity can be obtained. However, the concentration of the lithium salt is not limited to the above.

### [Separator]

The separator is provided between the positive electrode and the negative electrode. The separator is excellent in ion permeability and has moderate mechanical strength and insulating properties. For example, a microporous thin film, a woven fabric, or a nonwoven fabric can be used as the separator. Preferably, the material of the separator is a polyolefin such as polypropylene or polyethylene.

One example of the configuration of the secondary battery is a configuration in which an electrode group and a nonaqueous electrolyte are housed in an outer housing. Here, the electrode group includes a positive electrode and a negative electrode wound with a separator therebetween. Alternatively, another type of the electrode group, for example, a stacked-type electrode group, including the positive electrode and the negative electrode stacked with the separator therebetween, may be adopted rather than the wound-type electrode group. The secondary battery may be cylindrical, prismatic, coin-shaped, button-shaped, or laminated, for example.

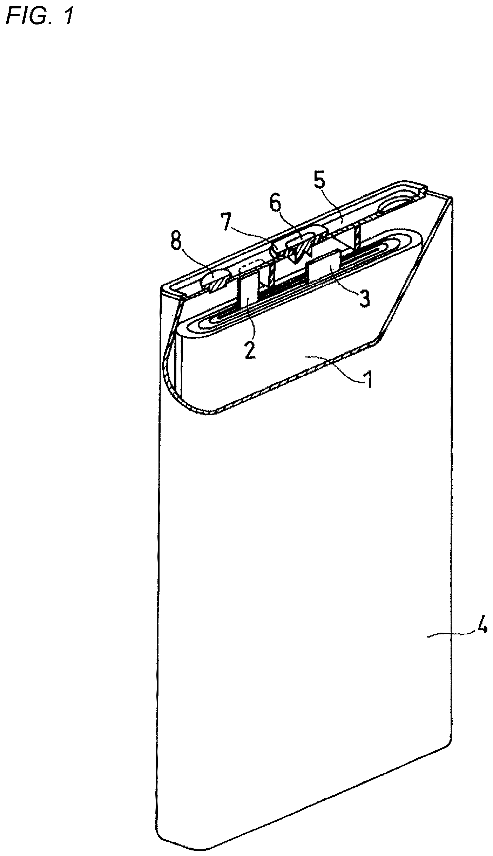

FIG. 1 is a schematic oblique view of a prismatic secondary battery according to an embodiment of the present disclosure, with a portion cut away.

The battery includes a bottomed prismatic battery case 4 and an electrode group 1 and a nonaqueous electrolyte (not illustrated) housed in the battery case 4. The electrode group 1 includes an elongated band-shaped negative electrode, an elongated band-shaped positive electrode, and a separator provided therebetween. The negative electrode current collector of the negative electrode is electrically connected to a negative electrode terminal 6 provided at a sealing plate 5 via a negative electrode lead 3. The negative electrode terminal 6 is insulated from the sealing plate 5 by a resin-made gasket 7. The positive electrode current collector of the positive electrode is electrically connected to the back surface of the sealing plate 5 via a positive electrode lead 2. That is, the positive electrode is electrically connected to the battery case 4 which also serves as a positive electrode terminal. The periphery of the sealing plate 5 fits to the open end of the battery case 4, and the fitting part is laser welded. The sealing plate 5 has an injection hole for the nonaqueous electrolyte, which is blocked by a sealing plug 8 after injection.

The secondary battery may have a configuration including a metal-made battery case in a cylindrical shape, a coin shape, or a button shape, or may be a laminated battery including a battery case formed of a laminated sheet that is a laminate of a barrier layer and a resin sheet. In the present disclosure, no particular limitations are placed on the type, shape, and the like of the secondary battery.

### <<Supplemental Remarks>>

According to the above description of the embodiments, the following techniques are disclosed.

### (Technique 1)

A positive electrode active material for secondary batteries including:
a lithium-metal composite oxide having a rock-salt type crystal structure assignable to space group Fm-3m,
wherein the lithium-metal composite oxide contains at least Li and Mn, and
an average aspect ratio of particles of the lithium-metal composite oxide is less than 2.10.

### (Technique 2)

The positive electrode active material for secondary batteries according to Technique 1, wherein the lithium-metal composite oxide contains a positive element M different from Li and Mn, and
M includes at least one selected from the group consisting of Ti, Fe, Ge, Si, Ga, Ni, Co, Sn, Cu, Nb, Mo, Bi, V, Cr, Y, Zr, Zn, Na, K, Ca, Mg, Pt, Au, Ag, Ru, Ta, W, La, Ce, Pr, Gd, Sm, Eu, Yb, Dy, Al, and Er.

### (Technique 3)

The positive electrode active material for secondary batteries according to Technique 2, wherein the lithium-metal composite oxide contains at least Ti as the M.

### (Technique 4)

The positive electrode active material for secondary batteries according to any one of Techniques 1 to 3, wherein the lithium-metal composite oxide is an oxyfluoride containing F.

### (Technique 5)

The positive electrode active material for secondary batteries according to any one of Techniques 1 to 4, wherein the lithium-metal composite oxide is represented by a compositional formula LiₐMn_{b}M_{c}O_{d}Fₑ, and
1 ≤ a < 1.4, 0.5 ≤ b < 0.9, 0 ≤ c ≤ 0.4, 1.33 ≤ d ≤ 2, 0 ≤ e ≤ 0.67, and 1.7 ≤ d + e ≤ 2.2 are satisfied.

### (Technique 6)

The positive electrode active material for secondary batteries according to any one of Techniques 1 to 5, wherein the lithium-metal composite oxide is represented by a compositional formula LiₐMn_{b}M_{c}O_{d}, and
1 ≤ a < 1.4, 0.5 ≤ b < 0.75, 0 ≤ c ≤ 0.4, and 1.6 ≤ d ≤ 2 are satisfied.

### (Technique 7)

The positive electrode active material for secondary batteries according to any one of Techniques 1 to 6, wherein a D90 of the lithium-metal composite oxide in a number-based cumulative particle size distribution is larger than 0.46 µm.

### (Technique 8)

The positive electrode active material for secondary batteries according to any one of Techniques 1 to 7, wherein a D50 of the lithium-metal composite oxide in a number-based cumulative particle size distribution is 0.26 µm or less.

### (Technique 9)

The positive electrode active material for secondary batteries according to any one of Techniques 1 to 8, wherein in a number-based cumulative particle size distribution of the lithium-metal composite oxide, (D90 - D10)/D50 satisfies 1.2 < (D90 - D10)/D50.

### (Technique 10)

The positive electrode active material for secondary batteries according to any one of Techniques 1 to 9, wherein a specific surface area of the lithium-metal composite oxide is less than 21.9 m²/g.

### (Technique 11)

The positive electrode active material for secondary batteries according to any one of Techniques 1 to 10, wherein the particles of the lithium-metal composite oxide contain an impurity element, and
the impurity element is distributed in a surface layer of the particles.

### (Technique 12)

The positive electrode active material for secondary batteries according to any one of Techniques 1 to 11, which is obtained by sintering a raw material mixture containing a lithium compound and a manganese compound at 700°C or higher.

### (Technique 13)

A secondary battery including
a positive electrode; a negative electrode; an electrolyte; and a separator provided between the positive electrode and the negative electrode,
wherein the positive electrode contains the positive electrode active material for secondary batteries according to any one of claims 1 to 12.

Hereinafter, the present disclosure will be specifically described based on examples and comparative examples, but the present disclosure is not limited to the following examples.

### <Examples>

### [Positive Electrode Production]

A raw material mixture containing manganese oxide (Mn₂O₃), lithium carbonate (Li₂CO₃), and titanium oxide (TiO₂) was sintered at 950°C for 10 hours to obtain aggregated particles of a Li-excess lithium-metal composite oxide (Fm) satisfying LiₐMn_{b}M_{c}O_{d} (where 1 < a < 1.4, 0.5 ≤ b < 0.75, 0.1< c ≤ 0.4, and 1.6 ≤ d ≤ 2). The composition was identified by analyzing the lithium-metal composite oxide (Fm) using ICP emission spectrometry.

The aggregated particles of the lithium-metal composite oxide (Fm) thus obtained were crushed under various conditions using a planetary ball mill, thereby obtaining lithium-metal composite oxides (Fm) having various aspect ratios. Regarding one example of the lithium-metal composite oxides (Fm), the aggregated particles of a lithium-metal composite oxide (Fm) were charged into a planetary ball mill (PREMIUM-LINE P7 manufactured by Fritsch, rotational speed: 150 to 300 rpm, vessel: 45 mL, balls: ZrO₂ balls with 3-mm diameter), and treated in an air atmosphere at room temperature for up to 12 hours. The BET specific surface areas of the lithium-metal composite oxides (Fm) measured by the method described above were all in the range of 7.2 m²/g to 8.8 m²/g. In the lithium-metal composite oxides (Fm), the D50 ranged from 0.23 µm to 0.25 µm, the D90 ranged from 0.49 µm to 0.56 µm, and the span value ranged from 1.6 to 1.9.

The X-ray diffraction patterns of the lithium-metal composite oxides (Fm) after the crushing were measured and analyzed. It was confirmed from the numbers and peak positions of the XRD peaks that the lithium-metal composite oxides (Fm) each had a rock-salt type crystal structure assignable to space group Fm-3m.

A positive electrode slurry was prepared by mixing one of the resulting lithium-metal composite oxides (Fm), acetylene black, and polyvinylidene fluoride in a solid mass ratio of 7:2:1 using N-methyl-2-pyrrolidone (NMP) as a dispersion medium. Next, the positive electrode slurry was coated on a positive electrode current collector made of aluminum foil, and the coated film was dried and compressed. Thereafter, the resultant was cut to a predetermined electrode size to obtain a positive electrode. Then, the average aspect ratio was determined from a cross-sectional SEM image of the positive electrode using the above-described method.

### [Electrolyte Preparation]

A nonaqueous electrolyte was prepared by adding LiPF₆ as a lithium salt to a mixed solvent obtained by mixing ethylene carbonate (EC), ethyl methyl carbonate (EMC), and dimethyl carbonate (DMC) in a predetermined volume ratio.

### [Test Cell Preparation]

Test cells were each prepared using one of the positive electrodes described above and a counter negative electrode formed of lithium metal foil. The positive electrode and the counter negative electrode were arranged opposite to each other with the separator therebetween to form an electrode body, and the electrode body was housed in a coin-shaped outer can. After the electrolyte was injected, the outer can was sealed. In the manner described above, coin-shaped test secondary batteries were obtained.

### [Evaluation]

### (Discharge Capacity)

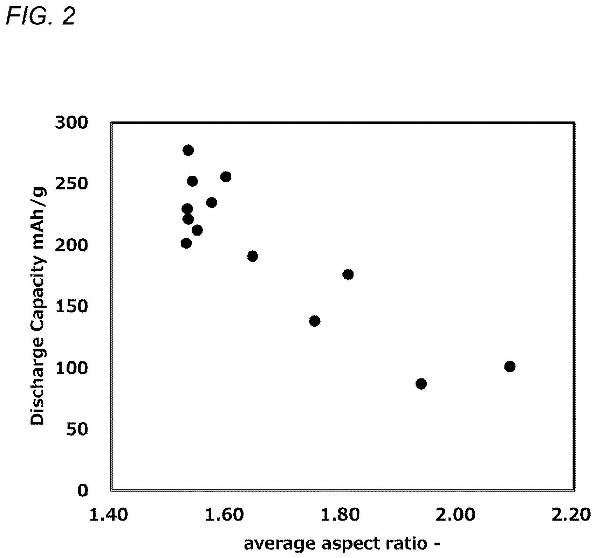

Each of the secondary batteries was subjected to constant current charging at a constant current of 0.1 C in an ambient temperature environment until the battery voltage reached 4.95 V, and then subjected to constant charging at a constant voltage of 4.95 V until the current reached 0.01 C. After a 20-minute pause, constant current discharging at 0.1 C was performed until the battery voltage reached 2.5 V. Then, the discharge capacity was measured. FIG. 2 shows the relationship between the discharge capacity (mAh/g) per mass and the average aspect ratio, both measured for each of the lithium-metal composite oxides (Fm).

FIG. 2 indicates that the discharge capacity is significantly increased by reducing the average aspect ratio of a lithium-metal composite oxide (Fm) to less than 2.1 (particularly 1.94 or less).

### <Reference Example 1>

In the positive electrode preparation, a raw material mixture containing manganese oxide (Mn₂O₃), lithium carbonate (Li₂CO₃), and titanium oxide (TiO₂) was charged into a planetary ball mill similar to that described above, and subjected to treatment in an Ar atmosphere at room temperature for 35 hours (35 cycles of one-hour operation followed by a 10-minute pause) to obtain a Li-excess lithium-metal composite oxide (Fm) having a composition similar to those of Examples. The X-ray diffraction pattern of the obtained lithium-metal composite oxide (Fm) was measured and analyzed to confirm that the lithium-metal composite oxide (Fm) had a rock-salt type crystal structure assignable to space group Fm-3m. The D50 was 0.22 µm, the D90 was 0.46 µm, the span value was 1.2, and the BET specific surface area was 13.2 m²/g. It is understood that such differences in physical properties from Examples are due to the difference in production methods.

### [Industrial Applicability]

According to the positive electrode active material for secondary batteries of the present disclosure, a secondary battery having a high energy density can be provided. The secondary battery according to the present disclosure is useful as a main power source of, for example, a mobile communication device or a portable electronic device.

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Reference Signs List]

1: electrode group, 2: positive electrode lead, 3: negative electrode lead, 4: battery case, 5: sealing plate, 6: negative electrode terminal, 7: gasket, 8: sealing plug

## Claims

1. A positive electrode active material for secondary batteries, comprising
a lithium-metal composite oxide having a rock-salt type crystal structure assignable to space group Fm-3m,
wherein the lithium-metal composite oxide contains at least Li and Mn, and
an average aspect ratio of particles of the lithium-metal composite oxide is less than 2.10.

2. The positive electrode active material for secondary batteries according to claim 1,
wherein the lithium-metal composite oxide contains a positive element M different from Li and Mn, and
M includes at least one selected from the group consisting of Ti, Fe, Ge, Si, Ga, Ni, Co, Sn, Cu, Nb, Mo, Bi, V, Cr, Y, Zr, Zn, Na, K, Ca, Mg, Pt, Au, Ag, Ru, Ta, W, La, Ce, Pr, Gd, Sm, Eu, Yb, Dy, Al, and Er.

3. The positive electrode active material for secondary batteries according to claim 2,
wherein the lithium-metal composite oxide contains at least Ti as the M.

4. The positive electrode active material for secondary batteries according to claim 1,
wherein the lithium-metal composite oxide is an oxyfluoride containing F.

5. The positive electrode active material for secondary batteries according to any one of claims 1 to 4,
wherein the lithium-metal composite oxide is represented by a compositional formula LiₐMn_{b}M_{c}O_{d}Fₑ, and
1 ≤ a < 1.4, 0.5 ≤ b < 0.9, 0 ≤ c ≤ 0.4, 1.33 ≤ d ≤ 2, 0 ≤ e ≤ 0.67, and 1.7 ≤ d + e ≤ 2.2 are satisfied.

6. The positive electrode active material for secondary batteries according to any one of claims 1 to 4,
wherein the lithium-metal composite oxide is represented by a compositional formula LiₐMn_{b}M_{c}O_{d}, and
1 ≤ a < 1.4, 0.5 ≤ b < 0.75, 0 ≤ c ≤ 0.4, and 1.6 ≤ d ≤ 2 are satisfied.

7. The positive electrode active material for secondary batteries according to any one of claims 1 to 4,
wherein a D90 of the lithium-metal composite oxide in a number-based cumulative particle size distribution is larger than 0.46 µm.

8. The positive electrode active material for secondary batteries according to any one of claims 1 to 4,
wherein a D50 of the lithium-metal composite oxide in a number-based cumulative particle size distribution is 0.26 µm or less.

9. The positive electrode active material for secondary batteries according to any one of claims 1 to 4
wherein in a number-based cumulative particle size distribution of the lithium-metal composite oxide, (D90 - D10)/D50 satisfies 1.2 < (D90 - D10)/D50.

10. The positive electrode active material for secondary batteries according to any one of claims 1 to 4,
wherein a specific surface area of the lithium-metal composite oxide is less than 21.9 m²/g.

11. The positive electrode active material for secondary batteries according to any one of claims 1 to 4,
wherein the particles of the lithium-metal composite oxide contain an impurity element, and
the impurity element is distributed in a surface layer of the particles.

12. The positive electrode active material for secondary batteries according to any one of claims 1 to 4,
which is obtained by sintering a raw material mixture containing a lithium compound and a manganese compound at 700°C or higher.

13. A secondary battery comprising:
a positive electrode; a negative electrode; an electrolyte; and a separator provided between the positive electrode and the negative electrode,
wherein the positive electrode contains the positive electrode active material for secondary batteries according to any one of claims 1 to 4.
